# EUROPEAN PATENT APPLICATION

(11) **EP 4 084 193 A1**
(43) Date of publication of application: **02.11.2022**
(21) Application number: 21170863.1
(22) Date of filing: 28.04.2021
(51) Int. Cl.: H01M 50/109, H01M 10/04, H01M 10/0587, H01M 50/153, H01M 50/171, H01M 50/186, H01M 50/463, H01M 50/531, H01M 50/536, H01M 50/548, H01M 50/559, H01M 10/0525

(54) **SQUARE WINDED BUTTON LITHIUM BATTERY**

(71) Applicant: Dongguan Huiyan Electronic Co., Ltd., Dongguan City, Guangdong Province (CN)
(72) Inventor: Duan, Xingyi, Dongguan City, Guangdong Province (CN)
(74) Representative: Sánchez Margareto, Carolina

(57) **Abstract**

The disclosure discloses a square winded button lithium battery, including a positive electrode upper cover, a negative electrode lower cover, an intermediate insulating spacer and a cell, wherein the cell includes a positive plate, a negative plate, a first diaphragm and a second diaphragm; after the positive and negative plates are winded, ends are directly welded on the positive and negative electrode upper covers through ultrasonic welding or laser welding to achieve the purpose of connection; tab components are not needed, so as to omit the traditional process that tabs are overlapped and welded on the plates, which effectively simplifies the process flow and facilitates the improvement of the degree of production automation; meanwhile a risk of short circuit firing caused by punctured diaphragm easily occurring in wrapping tabs is avoided, so as to effectively improve the safety property of the battery; in addition, since no tab occupies the interior space of a shell, which promotes the energy density of a battery in unit volume to a great extent. In summary, application of the technical solution of the disclosure can promote production efficiency, improve product safety and enhance product property, make the cost cheaper, and then promote the comprehensive competitiveness of the product.

## Description

### TECHNICAL FIELD

The disclosure belongs to the technical field of button batteries, and particularly relates to a square winded button lithium battery.

### BACKGROUND

The shape and size of a button battery are similar to those of a button, so it is also called button battery, has the characteristics of large diameter and thin thickness, and is often used as a power source for various electronic products. There are many types of button batteries. According to difference between materials used, the button batteries are divided into a silver oxide battery, a lithium battery, a basic manganese battery and the like, among which, the button lithium battery is widely applied due to high capacity, long circular life, low cost and green and environmental protection and the like.

The existing button lithium battery cell assembling methods include an overlapping method and a winding method. However, whether it is an overlapped or winded cell, it is usually necessary to overlap the positive and negative tabs on the plate and weld them to the shell or connect positive and negative electrodes in a mode of soft packaging. Such the existing manner is time-consuming in manufacturing process and low in production efficiency; furthermore, since the tab is made of a metal material, wrapping of the tab in the plate easily punctures the diaphragm to cause short circuit firing; in addition, the tab occupies a certain space inside the shell which is originally small in volume, which causes the loss of energy density in unit volume.

### SUMMARY

For the above defects, the objective of the disclosure is to provide a square winded button lithium battery which is ingenious and reliable in structure design.

In order to achieve the objective, the technical solution provided by the disclosure is as follows: Provided is a square winded button lithium battery, comprising a positive electrode upper cover, a negative electrode lower cover, an intermediate insulating spacer and a cell, the positive electrode upper cover and the negative electrode lower cover being buckled to form a shell having an interior space, the intermediate insulating spacer being located between the positive electrode upper cover and the negative electrode lower cover, and the cell being located in the shell, wherein the cell comprises a positive plate, a negative plate, a first diaphragm and a second diaphragm; the first diaphragm, the positive plate, the second diaphragm and the negative plate are overlapped in turn and winded to form a square body, wherein the end of the positive plate is located on the top surface of the square body and directly welded on the inner wall of the positive electrode upper cover, and the end of the negative plate is located on the bottom surface of the square body and directly welded on the inner wall of the negative plate lower cover.

As a preferred embodiment of the disclosure, the positive plate comprises a positive electrode portion whose front and back faces are both coated with positive material coatings and a positive electrode connection portion which is connected with the positive electrode portion and not coated with the positive material coating. That is, an electrode foil is coated with a positive material coating to form the positive electrode portion, and a blank is left on the end of the electrode foil to form the positive electrode connection portion. When in welding, the positive electrode connection portion is welded on the inner wall of the positive electrode upper cover from the outer surface of the positive electrode upper cover by directly using ultrasonic welding or laser welding to achieve electrical connection.

As a preferred embodiment of the disclosure, the length of the first diaphragm is shorter than that of the positive plate so that the positive electrode connection portion of the positive plate is exposed to facilitate the welding process.

As a preferred embodiment of the disclosure, the negative plate comprises a negative electrode portion whose front and back faces are both coated with negative material coatings and a negative electrode connection portion which is connected with the negative electrode portion and not coated with the negative material coating. That is, an electrode foil is coated with a positive material coating to form the positive electrode portion, and a blank is left on the end of the electrode foil to form the negative electrode connection portion. When in welding, the negative electrode connection portion is welded on the inner wall of the negative electrode upper cover from the outer surface of the negative electrode lower cover by directly using ultrasonic welding or laser welding to achieve electrical connection.

As a preferred embodiment of the disclosure, the length of the second diaphragm is shorter than that of the negative plate so that the negative electrode connection portion of the negative plate is exposed to facilitate the welding process.

As a preferred embodiment of the disclosure, the length of the positive electrode connection portion is the same as that of the negative electrode connection portion, which is advantageous to production and welding process.

As a preferred embodiment of the disclosure, the opening of the negative electrode lower cover is expanded to form an expansion portion which facilitates the positive electrode upper cover to be buckled into the expansion portion. Through the guide of the expansion portion, the positive electrode upper cover and the negative electrode lower cover are conveniently and rapidly assembled so as to improve production efficiency.

As a preferred embodiment of the disclosure, the lower edge of the intermediate insulating spacer is inwardly turned over to form a bearing portion. The bearing portion just can wrap the lower end of the positive electrode upper cover to avoid that the lower end of the positive electrode upper cover is in contact with the inner cavity of the negative electrode lower cover, so as to promote an insulating effect.

As a preferred embodiment of the disclosure, the positive electrode upper cover is a square cover body. The negative electrode lower cover is a square cover body. They more fit to the contour profile of the cell. The square winded button lithium battery is compact in whole structure, thereby reducing the occupied space.

The disclosure has the beneficial effects that the square winded button lithium battery is ingenious and reliable in structure design, the positive and negative plates are directly connected with the shell, the tab components are not needed so as to omit the traditional process that the tabs need to be welded on the plates, thereby effectively simplifying the process flow and facilitating the degree of production automation; meanwhile, a risk of short circuit firing caused by punctured diaphragm easily occurring in wrapping tabs is avoided to effectively improve the safety property of the battery; in addition, since the no tab occupies the interior space of the shell, which promotes the energy density of the battery in unit volume to a great extent. In summary, application of the technical solution of the disclosure can promote production efficiency, improve product safety and enhance product property, make the cost cheaper, and then promote the comprehensive competitiveness of the product.
The disclosure will be further described in combination with drawings and examples.

### BRIEF DESCRIPTION OF THE DRAWINGS

Fig.1 is a three-dimensional diagram of a structure of the disclosure.
Fig.2 is an exploded view of a structure of the disclosure.
Fig.3 is a structural diagram of an intermediate insulating spacer of the disclosure.
Fig.4 is a structural diagram of a cell of the disclosure.

### DESCRIPTION OF THE EMBODIMENTS

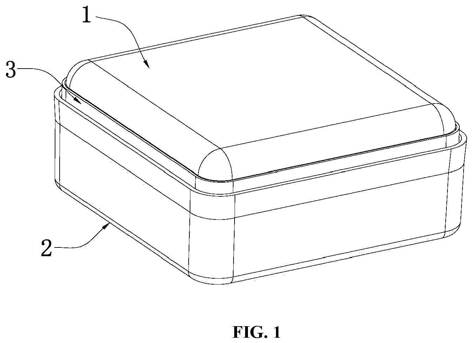

Examples: referring to Fig.1-Fig.4, this example provides a square winded button lithium battery, including a positive electrode upper cover 1, a negative electrode lower cover 2, an intermediate insulating spacer 3 and a cell 4,

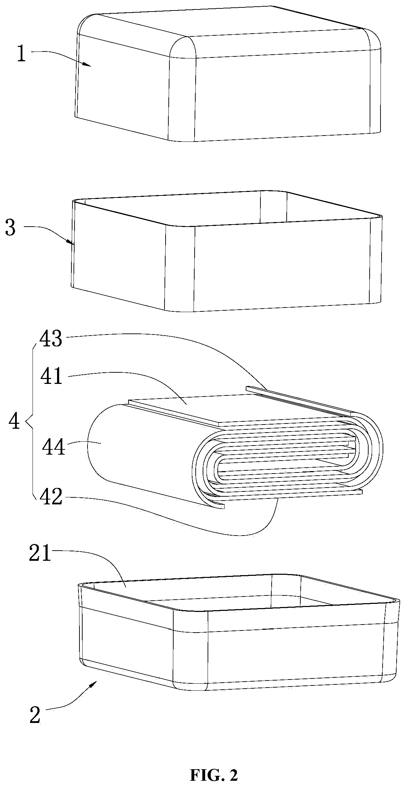

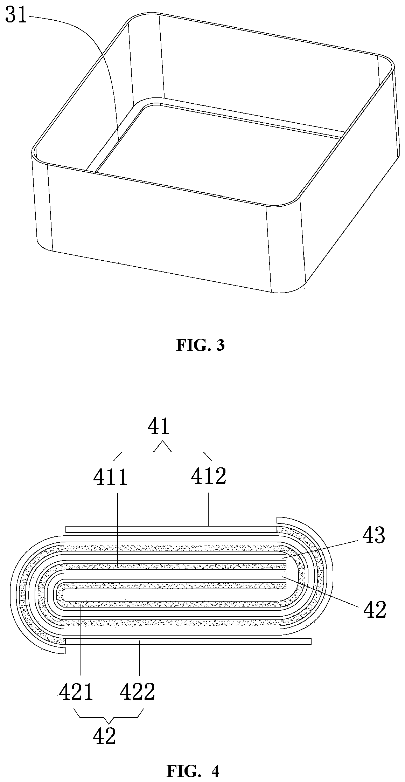

Referring to Fig.2, the opening of the negative electrode lower cover 2 is expanded to form an expansion portion 21 which facilitates the positive electrode upper cover 1 to be buckled into the expansion portion 21. Through the guide of the expansion portion 21, the positive electrode upper cover 1 and the negative electrode lower cover 2 are conveniently and rapidly assembled so as to improve production efficiency. The positive electrode upper cover 1 and the negative electrode lower cover 2 are buckled to form a shell having an interior space, the intermediate insulating spacer 3 is located between the positive electrode upper cover 1 and the negative electrode lower cover 2. That is, the inner wall of the intermediate insulating spacer 3 is wrapped on the outer side wall of the positive electrode upper cover 1, the outer wall of the intermediate insulating spacer 3 tightly clings to the inner side wall of the negative electrode lower cover 2 so that the positive electrode upper cover 1 is separated from the negative electrode lower cover 2 to avoid contact. Preferably, referring to Fig.3, the lower edge of the intermediate insulating spacer 3 is inwardly turned over to form a bearing portion 31. The bearing portion 31 just can wrap the lower end of the positive electrode upper cover 1 to avoid contact between the lower end of the positive electrode upper cover 1 and the inner cavity of the negative electrode lower cover 2, yielding a good separation effect.

The cell 4 is located in the shell, the cell 4 includes a positive plate 41, a negative plate 42, a first diaphragm 43 and a second diaphragm 44; the first diaphragm 43, the positive plate 41, the second diaphragm 44 and the negative plate 42 are overlapped in turn and winded to form a square body. In this example, both the positive electrode upper cover 1 and the negative electrode lower cover 2 are preferably square cover bodies, which more fit to the contour profile of the cell 4. The whole structure is compact, thereby reducing the occupied space.

Referring to Fig.4, the end of the positive plate 41 is located on the top surface of the square body and directly welded on the inner wall of the positive electrode upper cover 1 through ultrasonic welding or laser welding. Specifically, the positive plate 41 includes a positive electrode portion 411 whose front and back faces are both coated with positive material coatings and a positive electrode connection portion 412 which is connected with the positive electrode portion 411 and not coated with the positive material coating, that is, the electrode foil is coated with the positive material coating to form the positive electrode portion 411, and a blank is left on the end of the electrode foil to form the positive electrode connection portion 412. When in welding, the positive electrode connection portion 412 is welded on the inner wall of the positive electrode upper cover 1 from the outer surface of the positive electrode upper cover 1 by directly using ultrasonic welding or laser welding to achieve electrical connection.

The end of the negative plate 42 is located on the bottom surface of the square body and directly welded on the inner wall of the negative plate lower cover 2. Similarly, the negative plate 42 includes a negative electrode portion 421 whose front and back faces are both coated with negative material coatings and a negative electrode connection portion 422 which is connected with the negative electrode portion 421 and not coated with the positive material coating, that is, the electrode foil is coated with the negative material coating to form the negative electrode portion 421, and a blank is left on the end of the electrode foil to form the negative electrode connection portion 422. When in welding, the negative electrode connection portion 422 is welded on the inner wall of the negative electrode upper cover from the outer surface of the negative electrode upper cover 2 by directly using ultrasonic welding or laser welding to achieve electrical connection.

In this example, the length of the first diaphragm 43 is shorter than that of the positive plate 41 so that the positive electrode connection portion 412 of the positive plate 41 is exposed. The length of the second diaphragm 44 is shorter than that of the negative plate 42 so that the negative electrode connection portion 422 of the negative plate 42 is exposed. The length of the positive electrode connection portion 412 is the same as that of the negative electrode connection portion 422, which is advantageous to standardized production and welding process of the product. In other examples, the opening is formed on the first diaphragm 43 so that the positive electrode connection portion 412 is locally or completely exposed, so as to achieve the purpose of facilitating welding as well.
During the production, it is achieved directly by direct ultrasonic welding or laser welding that the positive plate 41 and the negative plate 42 are correspondingly welded with the positive electrode upper cover 1 and the negative electrode lower cover 2, so that the traditional tab components are omitted, correspondingly, the traditional process in which the tabs need to be overlapped is also omitted, thereby simplifying the process flow; meanwhile, the risk of short circuit firing caused by punctured diaphragm easily occurring in wrapping tabs is avoided and the safety property of the battery is effectively improved; in addition, since no tab occupies the interior space of the shell, which effectively promotes the energy density of the battery in unit volume.

According to the reveal and teaching of the above description, those skilled in the art can also make variations and modifications to the above embodiments. Thus, the disclosure is not limited to the above-described specific embodiments, some modifications and variations made to the disclosure should also be included with the scope of protection of claims of the disclosure. In addition, although some specific terms are used in this description, these terms are only for illustration but not limiting the disclosure. As described in the above examples of the disclosure, all of other batteries having the same or similar structures fall within the scope of protection of the disclosure.

## Claims

1. A square winded button lithium battery, comprising a positive electrode upper cover, a negative electrode lower cover, an intermediate insulating spacer and a cell, the positive electrode upper cover and the negative electrode lower cover being buckled to form a shell having an interior space, the intermediate insulating spacer being located between the positive electrode upper cover and the negative electrode lower cover, and the cell being located in the shell, wherein the cell comprises a positive plate, a negative plate, a first diaphragm and a second diaphragm; the first diaphragm, the positive plate, the second diaphragm and the negative plate are overlapped in turn and winded to form a square body, wherein the end of the positive plate is located on the top surface of the square body and directly welded on the inner wall of the positive electrode upper cover, the end of the negative plate is located on the bottom surface of the square body and directly welded on the inner wall of the negative plate lower cover.

2. The square winded button lithium battery according to claim 1, wherein the positive plate comprises a positive electrode portion whose front and back faces are both coated with positive material coatings and a positive electrode connection portion which is connected with the positive electrode portion and not coated with the positive material coating.

3. The square winded button lithium battery according to claim 2, wherein the length of the first diaphragm is shorter than that of the positive plate so that the positive electrode connection portion of the positive plate is exposed.

4. The square winded button lithium battery according to claim 2, wherein the negative plate comprises a negative electrode portion whose front and back faces are both coated with negative material coatings and a negative electrode connection portion which is connected with the negative electrode portion and not coated with the negative material coating.

5. The square winded button lithium battery according to claim 4, wherein the length of the second diaphragm is shorter than that of the negative plate so that the negative electrode connection portion of the negative plate is exposed.

6. The square winded button lithium battery according to claim 4, wherein the length of the positive electrode connection portion is the same as that of the negative electrode connection portion.

7. The square winded button lithium battery according to claim 1, wherein the opening of the negative electrode lower cover is expanded to form an expansion portion which facilitates the positive electrode upper cover to be buckled into the expansion portion.

8. The square winded button lithium battery according to claim 1, wherein the lower edge of the intermediate insulating spacer is inwardly turned over to form a bearing portion.

9. The square winded button lithium battery according to any one of claims 1-8, wherein the positive electrode upper cover is a square cover body.

10. The square winded button lithium battery according to claim 9, wherein the negative electrode lower cover is a square cover body.
